Europäisches Patentamt

European Patent Office

Office européen des brevets

(19)

(11) Publication number: **0 150 988**
**A2**

# (12) EUROPEAN PATENT APPLICATION

(21) Application number: **85300465.3**

(22) Date of filing: **24.01.85**

(51) Int. Cl.⁴: **G 06 K 15/10, B 41 J 3/02**

(30) Priority: **26.01.84 JP 12452/84**

(43) Date of publication of application: **07.08.85**
**Bulletin 85/32**

(84) Designated Contracting States: **DE FR GB NL**

(71) Applicant: **Kabushiki Kaisha Toshiba, 72, Horikawa-cho Saiwai-ku, Kawasaki-shi Kanagawa-ken 210 (JP)**

(72) Inventor: **Miyashita, Kazuhisa, Patent Division 1-1 Shibaura 1-chome, Minato-ku, Tokyo 105 (JP)**

(74) Representative: **Freed, Arthur Woolf et al, MARKS & CLERK 57-60 Lincoln's Inn Fields, London WC2A 3LS (GB)**

(54) Enlarged picture output apparatus.

(57) An enlarged picture output apparatus includes a picture pattern enlargement converting circuit for applying an enlargement conversion processing to an input picture pattern. The enlargement conversion processing is such that patterns of the first and final columns of a picture pattern enlaged are configured by the same patterns as those of the first and final columns of the input picture pattern, respectively, such that each pattern of the 2n-th column of the picture pattern enlarged is configured by a pattern expressed by a false binary digit alone, and such that when at least either of picture elements corresponding to the n-th and (n + 1)-th columns of the input picture pattern is expressed by a true binary digit, each pattern of the (2n + 1)-th column of the picture pattern enlarged is expressed by the true binary digit, while when expressed by the false binary digit, it is expressed by the false binary digit. A picture pattern enlargement-converted by the picture pattern enlargement converting circuit is output by means of a picture output circuit. The enlarged picture output apparatus is particularly suitable for a dot-matrix printer, thus making it possible to greatly improve the general impression of enlarged pictures such as characters printed with the printer without lowering printing speed.

1

## ENLARGED PICTURE OUTPUT APPARATUS

The present invention relates to an enlarged picture output apparatus, and more particularly to an enlarged picture output apparatus configured so that there is little picture or image distortion due to an enlargement processing.

Hitherto, dot-matrix printers have employed staggered type dot pattern characters. They are configured so that dots appear on adjacent vertical columns parallely displaced in an alternative manner to increase the density of printing dots, thus avoiding successive application of impacts to the same pin, thereby enabling to improve general impression of the print image without lowering printing speed.

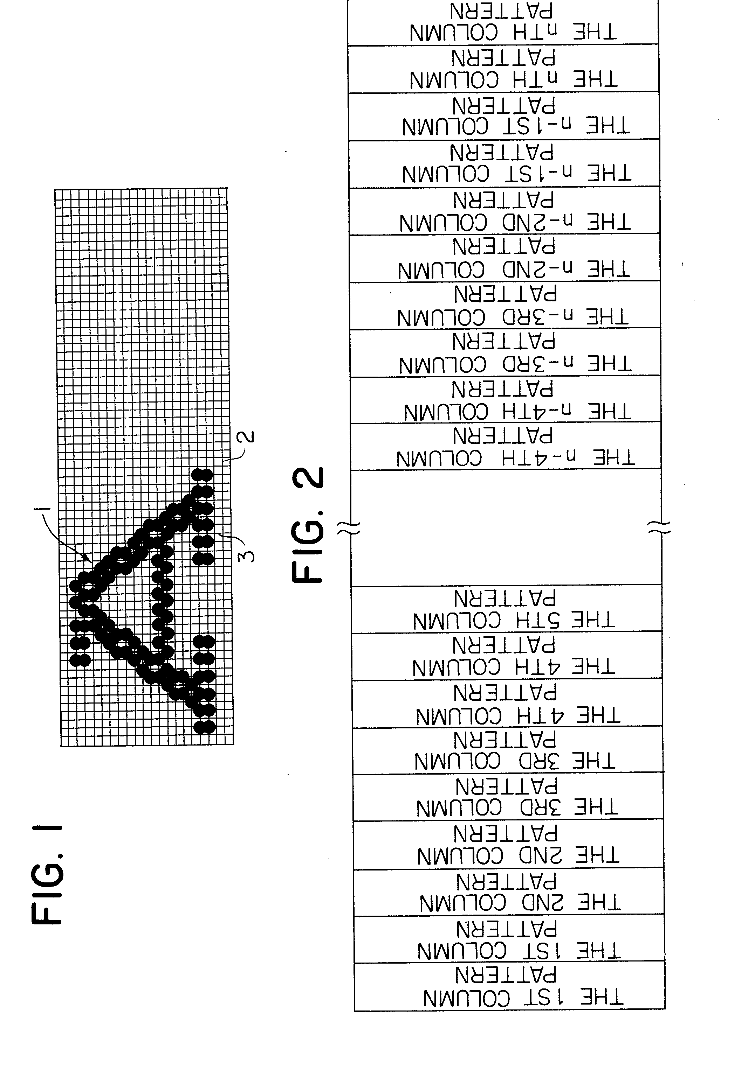

Referring to Fig. 1, there is shown an exsample of a dot pattern character 1 output with the above-mentioned method. In this figure, reference numeral 2 denotes dot matrices wherein dots 3 for defining dot pattern character 1 are located on intersections defined by logitudinal and lateral lines orthogonally intersecting with each other. Thus, the dot pattern character 1 is formed on the dot matrices 2.

When expanding such a dot pattern character 1 and printing the expanded character or displaying it on a CRT (Cathode Ray Tube), ther has been generally used a method of enlarging the dot pattern so that its size is two times larger than that of the original pattern in a lateral direction by adding dots on respective dot locations of dot matrices defining an overall dot pattern.

Fig. 2 is an explanatory view illustrating an example of the above-mentioned image expanding method. This method includes the step of inputting a digital picture elements each pressed by a true binary digit and other picture elements each expressed by a false binary digit arranged in a series of columns, and applying a predetermined picture enlargement processing to the digital input picture with a part of the input picture or the whole thereof being as a unit of processing in a manner that the same picture element is repeated twice in a laterral direction.

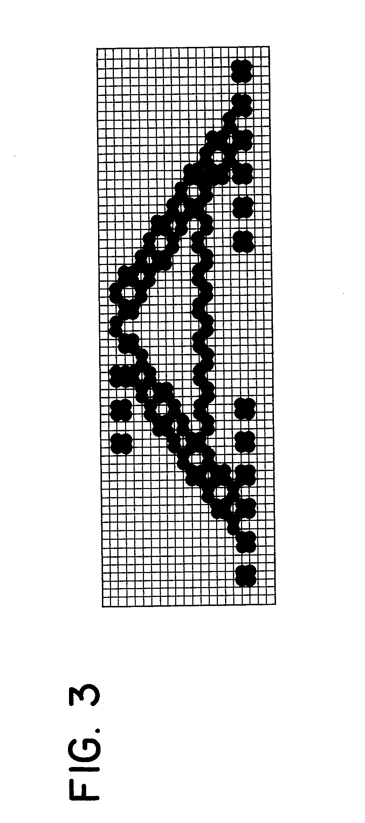

Fig. 3 shows an example of a dot pattern character configured by applying the above-mentioned character enlargement processing method to the dot pattern character shown in Fig. 1.

However, when the character expanded with such a method is employed, the drawbacks are that because black dots are successively printed, the printing speed is lowered and the density of a dot pattern does not become uniform, resulting in indistinct characters.

With the above in view, an object of the present invention is to provide a picture enlargement processing system which is advantageous in that pictures or images to be formed are not destroyed or collapsed, a dot pattern has a uniform density, and a printing speed is not lowered.

Another object of the present invention is to provide a dot-matrix printing apparatus configured by employing such a picture enlargement processing system.

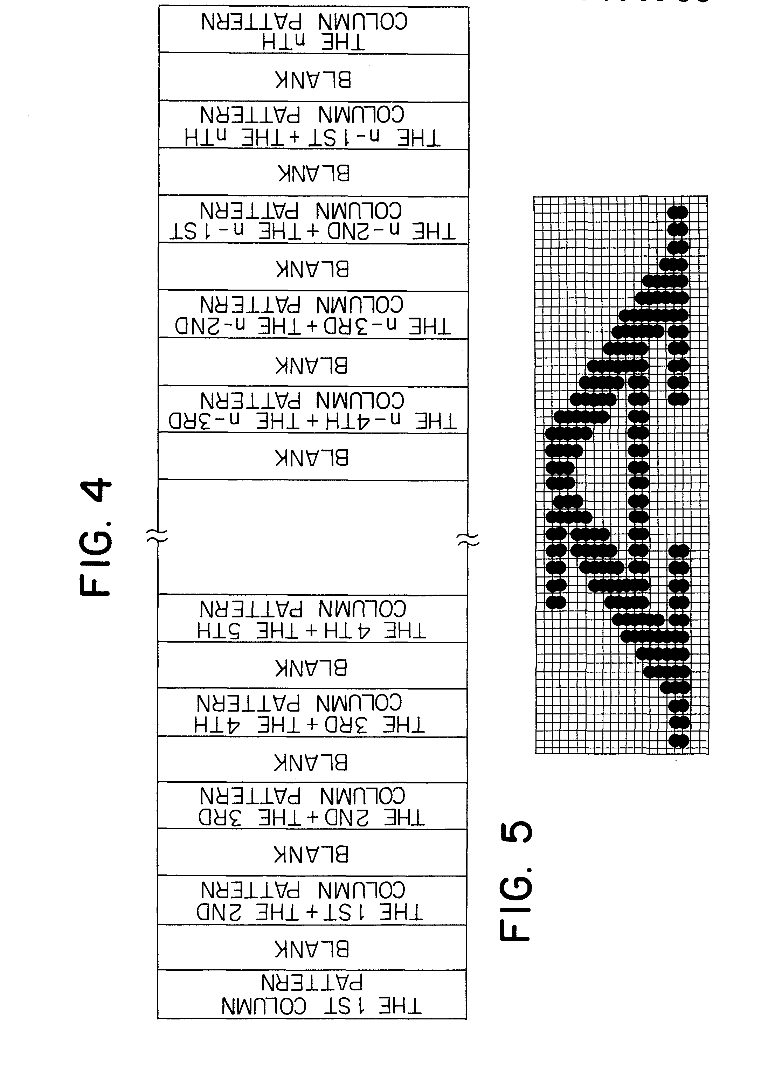

Namely, an enlarged picture output apparatus according to the present invention is characterized in that there are provided input means for inputting a picture pattern configured so that when there exists a dot at a picture element corresponding to each of intersections defined by columns and rows, the picture pattern is expressed by a true binary digit, while when there does not exist a dot thereat, the picture pattern is expressed by a false binary digit, and picture pattern enlargement converting means for applying an enlargement conversion processing to the picture pattern input from the input means as shown in Fig. 4, wherein the enlargement conversion processing is such that i) a pattern of the first column of a picture

0150988

pattern enlarged is configured by the same pattern as that of the first column of the input picture pattern, ii) each pattern of the 2n-th column (n is a positive integer more than 1) of the picture pattern enlarged is configured by a pattern expressed by the false binary digit alone, iii) when at least either of picture elements corresponding to the n-th and (n+1)-th columns of the input picture pattern is expressed by the true binary digit, each pattern of the (2n+1)-th column of the picture pattern enlarged is expressed by the true binary digit, and when both picture elements corresponding to the n-th and (n+1)-th columns of the input picture pattern are expressed by the false binary digit, each pattern of the (2n+1)-th column of the picture pattern enlarged is expressed by the false binary digit, and iv) a pattern of the final column of the picture pattern enlarged is configured by the same pattern as that of the final column of the input picture pattern.

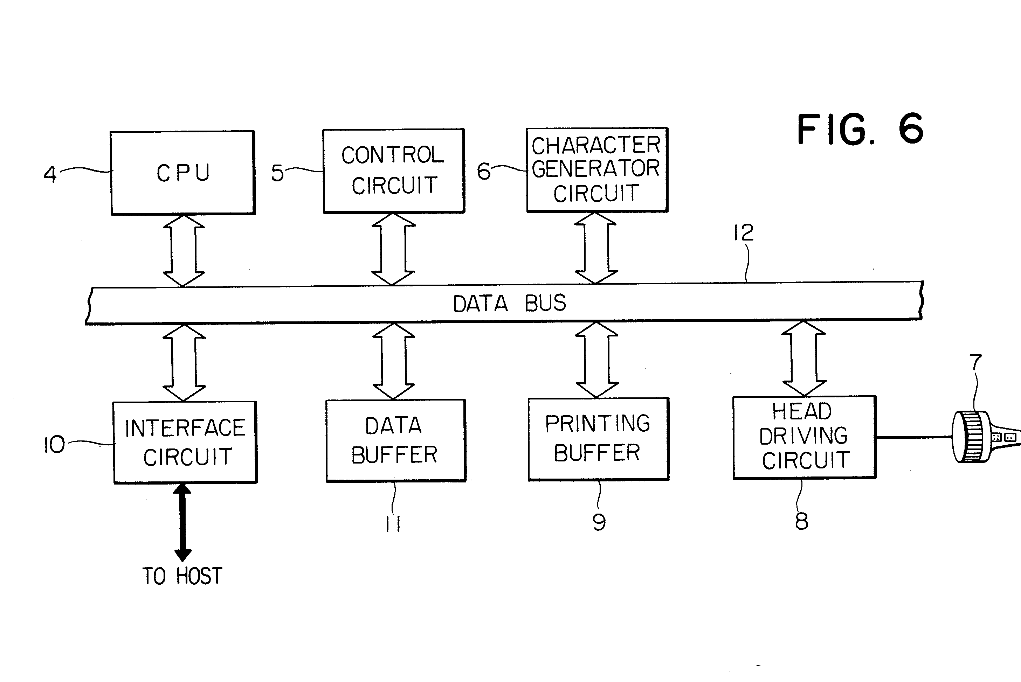

In accordance with the present invention, character image obtained by applying an enlargement processing to the character pattern shown in Fig. 1, is formed in a manner that white patterns are inserted every second column of the character pattern defining an original picture, respectively shown in Fig.5, and therefore the contour of the enlarged character pattern cannot be destroyed in the form of stair-steps and the

5

0150988

density of printing dots becomes uniform, thus enabling to obtain a character pattern clearly enlarged. Further,since dots do not appear in succession, there is no possibility that printing speed is not lowered even when staggered type dot pattern characters are expanded and the enlarged characters are printed.

The features and advantages of an enlarged picture output device according to the present invention will become more apparent from the folliwng description taken in conjunction with the accompanying drawings, in which:

Fig. 1 is a graphic representation of a high density of dot pattern characters formed with a staggered system,

Fig. 2 is view for explaining a prior art character enlargement system,

Fig. 3 is a graphic representation of an expanded dot pattern character obtained with the character expansion system shown in Fig 2,

Fig. 4 is a view for explaining a character enlargement system according to the present invention,

Fig. 5 is a graphic representation of an expanded dot pattern chracter obtained with the chracter enlargement system shown in Fig. 4,

Fig. 6 is a block diagram schematically illustrating an processing apparatus employed in the present invention, and

Fig. 7 is a flowchart for explaining an algorithm employed in the present invention.

A preferred embodiment according to the present invention will be described with reference to attached drawings.

Fig. 6 shows a block diagram of a processing apparatus used in an enbodiment of the invention.

The processing aparatus comprises a CPU (Micro processor ) 4 (of the type 8085, Intel Corporation) in which an algorithm to be referred to later is stored and a predetermined processing is executed based thereon, a control circuit 5 for controlling the overall operation of the processing device under the supervision of the CPU 4, a chracter generator circuit 6 (of the type 2732, Intel Corporation) in which character patterns are stored, a printing head 7 of a wire dot system for printing characters, a head driving circuit 8 for driving the printing head 7, a printing buffer 9 (of the type TMS 4016, Texas Instruments Incorporated) for converting a dot pattern  corresponding to a character code to head pins data, an interface circuit 10 of RS 232 C (ISO standard) for receiving data from an external device (not shown) such as a Host system etc. or transmitting it thereto, a data buffer 11 ( of the type TMS 4016NL, Texas Instruments Incorporated) for receiving data received from the external device through the interface circuit 10 and temporarily storing it therein, and a data bus 12.

The operation of the above-mentioned apparatus of the embodiment will be described.

When a command such as a character expanding command and data such as printing character codes are input from the Host system, they are input to the data buffer 11 though the interface circuit 10.

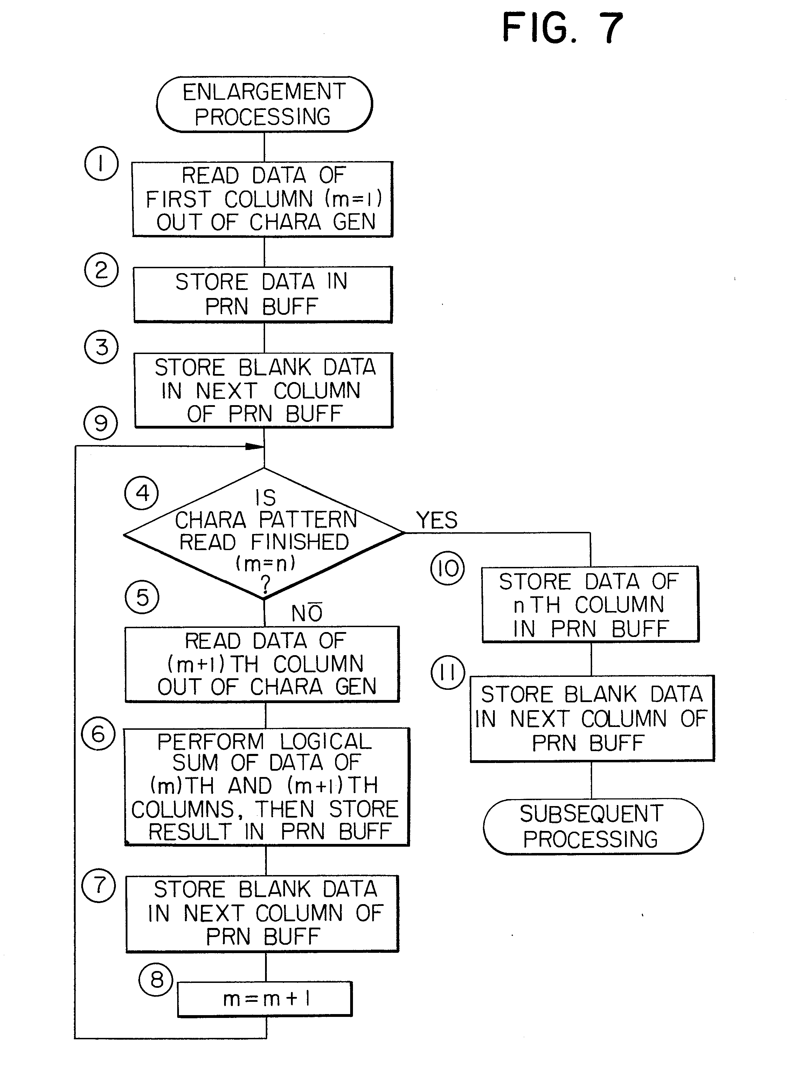

Among the data indicative of a control command and print character codes etc.input to the data buffer 11,the command is interpreted by the control circuit 5. Then,a character pattern corresponding to the print character code is read out of the character generator circuit 6. The character pattern is configured in a manner that black picture elements, i.e. picture elements printed as dots with head pins are designated by a true binaly digit e.g. logical "1" and picture elements which are not printed i.e. picture elements expressed by a ground colour of a paper are designated by a false binary digit e.g. logical "1" in correspondence with matrices comprising columns and rows. The CPU 4 applies a predetermined enlargement processing to the character pattern thus read on the basis of an algorithm stored therein in accordance with a flowchart shown in Fig. 7 under the control of the control circuit 5. Thus, the character pattern is converted to data corresponding to head pins.

It is assumed that the number of columns in the lateral direction of one character is n which is positive number more than 1 and the m-th dot column is being processed. First, the content of a counter (not shown) is set to 1 and data of the first column (m=1) is read out of the character generator circuit 6 (step 1). The data of the first column is converted to data corresponding to head pin and the data thus converted is stored in the printing buffer 9 (step 2).

Then, blank data (which is not actually printed) is stored in the next column of the printing buffer 9 (step 3).

Then, the judgement is carried out as to whether the current data of the m-th column is in correspondence with the data of the n-th column, i.e. the final column thereof the lateral dot series of one character (step 4). When the data of the m-th column is not equal to the data of the final (n-th) column, i.e. in the case of m≠n, data of the next column of the (m+1)-th column is read out of the character generator 6 (step 5). A logical sum of data assigned to the m-th column of the character pattern defined by the input character data and data assigned to the (m+1)-th column same is performed. The data expressed by the logical sum thus performed is converted to data corresponding to head pins and then is stored in the printing buffer 9 (step 6). Then, blank data is stored in the next

0150988

vertical column of the printing buffer 9 (step 7).

Thereafter, 1 is added to the content of the counter (m=m+1) and the dot column of the character generator circuit 6 is sifted to a different memory area of the printing buffer 9 (step 8). Then, the judgement as to whether the current data is equal to the final dot of one character or not (steps 9 and 4).

The operation stated above is repeatedly effected. Thus, when the current data is equal to the data of the final column of the lateral dot series of one character (m=n), the data of the n-th column is converted to data corresponding to head pins, and the data thus converted is stored in the printing buffer 9 (step 10). A blank data is inserted into the next column of the printing buffer 9 and the counter is reset (step 11).

The enlargement edit processing for one character is thus completed.

As stated above, after each data is stored into the printing buffer 9, a printing command is fed from the control circuit 5 to the head drive circuit 9. Thus, with the head drive circuit 8 allowing the printing head 7 to scan on a paper in one direction at a predetermined feeding speed, it drives a preselected pin of the printing head 7 in accordance with the data contents from the printing buffer 9 to print characters on the paper. Namely, when a signal corresponding to the true binary digit e.g. logical "1" is output, the head drive circuit 9 operates so as to drive head pin of a corresponding location, thereby to effect a printing.

In the above-mentioned embodiment, it has been described that the present invention is applied to the enlargement of dot pattern character for printing. However, the present invention is not limited to such an embodiment. Namely, the present invention may be also applicable to the enlargement of characters which are displayed on a CRT, or printed with a printing device of a ink jet system for printing a picture in two colours different from each other in its density or gradation etc.

Further, the present invention is not limited to an enlargement processing for characters, and is applicable to a processing for enlarging a part or the whole of picture pattern of an image input from an external device via an input device.

Furthermore, the present invention is applicable not only to an enlargement of pictures in a lateral direction but also to an enlargement thereof in a vertical direction.

11

0150988

<u>CLAIMS</u>:

1.      An enlarged picture output apparatus comprising:

a)   input means (10,11) for inputting a picture pattern configured so that when there exists a dot at a picture element corresponding to each of intersections defined by columns and rows, said picture pattern is expressed by a true binary digit, while when there does not exist a dot thereat, said picture pattern is expressed by a false binary digit,

b)   picture pattern enlargement converting means (6,9) for applying an enlargement coversion processing to said picture pattern input from said input means, said enlargement conversion being processed such that

i)   a pattern of the first column of a picture pattern enlarged is configured by the same pattern as a pattern of the first column of said input picture pattern,

ii)   each pattern of the 2n-th column (n is a positive integer more than 1) of said picture pattern enlarged is configured by a pattern expressed by the false binary digit alone,

iii)   when at least either of picture elements corresponding to the n-th and (n+1)-th columns of said input picture pattern is expressed by the true binary digit, each pattern of the (2n+1)-th column of said picture pattern enlarged is expressed by the true binary digit, and when both picture elements corresponding to the n-th and (n+1)-th columns of said input picture pattern are expressed by the false binary digit, each pattern of the (2n+1)-th column of said picture pattern enlarged is expressed by the false binary digit, and

iv) a pattern of the final column of said picture pattern enlarged is configured by the same pattern as a pattern of the final column of said input picture pattern, and

c) picture output means (7,8) operative to output a picture pattern enlargement-converted by said picture pattern enlargement converting means in two colors different from each other in its density or gradation.

2. An enlarged picture output apparatus comprising:

a) character pattern storage means (6) for storing character patterns configured so that when there exists a dot at a picture element corresponding to each of intersections defined by columns and rows, each of said character pattern is expressed by a true binary digit, while when there does not exist a dot thereat, each of said character pattern is expressed by a false binary digit,

b) input means (10,11) for inputting coded information corresponding to said character patterns stored in said character pattern storage means,

(5)

c) character pattern read means operative to read a corresponding character pattern stored in said character pattern storage means in response to said coded information input from said input means,

(6,9) d) character pattern enlargment converting means for applying an enlargement conversion processing to said character pattern read from said character pattern storage means by said character pattern read means, said enlargement convertion being processed such that

i) a pattern of the first column of a character pattern enlarged is configured by the same pattern as a pattern of the first column of a character pattern defined by said input coded information,

ii) each pattern of the 2n-th column (n is a positive integer more than 1) of said character pattern enlarged is configured by a pattern expressed by the false binary digit alone,

iii) when at least either of picture elements corresponding to the n-th and (n+1)-th columns of said character pattern read from said character pattern storage means is expressed by the true binary digit, each pattern of the (2n+1)-th column of said character pattern enlarged is expressed by the true binary digit, and when both picture element corresponding to the n-th and (n+1)-th columns of said character pattern read from said character pattern storage means are expressed by the false binary digit, each pattern of the (2n+1)-th column of said picture pattern enlarged is expressed by the false binary digit, and

iv) a pattern of the final column of said picture pattern enlarged is configured by the same pattern as a pattern of the final column of a pattern read from said character pattern storage means, and

e) character output means operative to output a character pattern enlargement-converted by said character pattern enlargement converting means in two colors different from each other in its density or gradation.

3. An enlarged picture output apparatus according to claim 1 or 2, wherein said true binary digit is logical "1" and said false binary digit is logical "0".

4. An enlarged picture output apparatus according to claim 1 or 2, wherein said true binary digit is logical "0" and said false binary digit is logical "1".

5. An enlarged picture output apparatus according to claim 1 or 4, wherein said picture output means is a dot-matrix printer.

6. An enlarged picture output apparatus according to claim 5, wherein said picture output means is a wire dot-matrix impact printer.

7.      An enlarged picture output apparatus according to claim 1 or 2, wherein said picture output means is a cathode ray tube display device.

8.      An enlarged picture output apparatus according to claims 1 or 2, wherein said input means comprises an interface circuit (10) for receiving data from an external device or transmitting it thereto, and a data buffer (11) for temporalily storing data received from said external device through said interface circuit 10.

# FIG. I

# FIG. 2

| THE 1ST COLUMN PATTERN | THE 1ST COLUMN PATTERN | THE 2ND COLUMN PATTERN | THE 2ND COLUMN PATTERN | THE 3RD COLUMN PATTERN | THE 3RD COLUMN PATTERN | THE 4TH COLUMN PATTERN | THE 4TH COLUMN PATTERN | THE 5TH COLUMN PATTERN | | THE n-4TH COLUMN PATTERN | THE n-4TH COLUMN PATTERN | THE n-3RD COLUMN PATTERN | THE n-3RD COLUMN PATTERN | THE n-2ND COLUMN PATTERN | THE n-2ND COLUMN PATTERN | THE n-1ST COLUMN PATTERN | THE n-1ST COLUMN PATTERN | THE nTH COLUMN PATTERN | THE nTH COLUMN PATTERN |
|---|---|---|---|---|---|---|---|---|---|---|---|---|---|---|---|---|---|---|---|

FIG. 3

FIG. 5

| |
|---|
| THE 1ST COLUMN PATTERN |
| BLANK |
| THE 1ST + THE 2ND COLUMN PATTERN |
| BLANK |
| THE 2ND + THE 3RD COLUMN PATTERN |
| BLANK |
| THE 3RD + THE 4TH COLUMN PATTERN |
| BLANK |
| THE 4TH + THE 5TH COLUMN PATTERN |
| ≈ |
| BLANK |
| THE n−4TH + THE n−3RD COLUMN PATTERN |
| BLANK |
| THE n−3RD + THE n−2ND COLUMN PATTERN |
| BLANK |
| THE n−2ND + THE n−1ST COLUMN PATTERN |
| BLANK |
| THE n−1ST + THE nTH COLUMN PATTERN |
| BLANK |
| THE nTH COLUMN PATTERN |

FIG. 4

2/3

## FIG. 6

4 — CPU

5 — CONTROL CIRCUIT

6 — CHARACTER GENERATOR CIRCUIT

12 — DATA BUS

10 — INTERFACE CIRCUIT

TO HOST

DATA BUFFER — 11

PRINTING BUFFER — 9

HEAD DRIVING CIRCUIT — 8

7

4/5

0150988

# FIG. 7

```
                ENLARGEMENT
                 PROCESSING
                      │
    ①  ┌───────────────────────────┐
       │      READ DATA OF          │
       │   FIRST COLUMN (m=1)       │
       │    OUT OF CHARA GEN        │
       └───────────────────────────┘
                      │
    ②  ┌───────────────────────────┐
       │      STORE DATA IN         │
       │        PRN BUFF            │
       └───────────────────────────┘
                      │
    ③  ┌───────────────────────────┐
       │     STORE BLANK DATA       │
       │     IN NEXT COLUMN         │
    ⑨  │       OF PRN BUFF          │
       └───────────────────────────┘
                      │
                      ▼
    ④         ╱─────────────╲
             ╱      IS        ╲
            ╱  CHARA PATTERN   ╲  ───── YES ─────┐
            ╲  READ FINISHED   ╱                 │
             ╲    (m=n)       ╱                  │
    ⑤         ╲      ?       ╱       ⑩  ┌──────────────────┐
                 ╲───────╱             │ STORE DATA OF     │
                     │ NO              │   nTH COLUMN      │
       ┌───────────────────────────┐  │   IN PRN BUFF     │
       │      READ DATA OF          │  └──────────────────┘
       │   (m+1)TH COLUMN           │            │
       │    OUT OF CHARA GEN        │  ⑪  ┌──────────────────┐
       └───────────────────────────┘     │ STORE BLANK DATA │
                      │                   │ IN NEXT COLUMN OF│
    ⑥  ┌───────────────────────────┐     │    PRN BUFF      │
       │    PERFORM LOGICAL         │     └──────────────────┘
       │    SUM OF DATA OF          │               │
       │  (m)TH AND (m+1)TH         │               │
       │ COLUMNS, THEN STORE        │          SUBSEQUENT
       │   RESULT IN PRN BUFF       │          PROCESSING
       └───────────────────────────┘
                      │
    ⑦  ┌───────────────────────────┐
       │     STORE BLANK DATA       │
       │   IN NEXT COLUMN OF        │
       │        PRN BUFF            │
       └───────────────────────────┘
                      │
    ⑧  ┌───────────────────────────┐
       │          m=m+1             │
       └───────────────────────────┘
```